# EUROPÄISCHE PATENTANMELDUNG

(11) **EP 0 886 199 A1**
(43) Veröffentlichungstag der Anmeldung: **23.12.1998**
(21) Anmeldenummer: 98201935.8
(22) Anmeldetag: 09.06.1998
(51) Int. Cl.: G05D 23/19, F24C 7/08

(54) **Verfahren zur Erzielung einer Behaglichkeitstemperatur (Empfindungs-Solltemperatur) in einem Raum und Anordnung zur Durchführung des Verfahrens**

(30) Priorität: 19.06.1997 DE 19726034
(71) Anmelder: Philips Patentverwaltung GmbH, 22335 Hamburg (DE); Koninklijke Philips Electronics N.V., 5621 BA Eindhoven (NL)
(72) Erfinder: Kersten, Reinhard, Dr, Röntgenstrasse 24, 22335 Hamburg (DE); Klinkenberg, Klaus, Röntgenstrasse 24, 22335 Hamburg (DE)
(74) Vertreter: Schmalz, Günther, Dipl.-Ing.

(57) **Zusammenfassung**

Die Erfindung bezieht sich auf ein Verfahren zur Erzielung einer Behaglichkeitstemperatur (Empfindungs-Solltemperatur) in der Umgebung einer in einem Raum (10) mit abgesenkter Temperatur (Empfindungs-Isttemperatur) befindlichen Person (12) mit Hilfe eines Heizstrahlers (14). Um in möglichst kurzer Zeit dem Nutzer des Raumes einen möglichst großen thermischen Komfort zu gewährleisten, wird gemäß der Erfindung vorgeschlagen, daß die Empfindungs-Isttemperatur im direkten Strahlungsfeld (13) des Heizstrahlers (14) in der Nähe der bestrahlten Person (12) gemessen wird, daß diese Empfindungs-Isttemperatur mit der von der Person (12) einstellbaren Empfindungs-Solltemperatur verglichen wird und daß die Differenz zwischen den genannten Temperaturen durch einen Regler (17), einen Leistungssteller (18) und durch den Heizstrahler (14) zu Null geregelt wird.

## Beschreibung

Die Erfindung bezieht sich auf ein Verfahren zur Erzielung einer Behaglichkeitstemperatur (Empfindungs-Solltemperatur) in der Umgebung einer in einem Raum mit abgesenkter Temperatur (Empfindungs-Isttemperatur) befindlichen Person mit Hilfe eines Heizstrahlers. Die Erfindung bezieht sich ferner auf eine Anordnung zur Durchführung dieses Verfahrens.

Die heute üblicherweise zur Raumheizung verwendeten Raumheizgeräte, und zwar Heizlüfter, Oelradiatoren oder Flachheizkörper, können den Anforderungen zur Erzielung einer Behaglichkeitstemperatur innerhalb einer kurzen Zeit nicht genügen. Diese Geräte benutzen normale Temperaturfühler, z.B. Bimetalle, Thermometer, NTC's, Thermoelemente, die überwiegend auf die Lufttemperatur ihrer Umgebung reagieren und wenig aussagen über den Strahlungskomfort am Ort des Nutzers. Dagegen sind elektrische Heizstrahler (Quarzrohrstrahler) und Hochtemperaturstrahler (Halogenlampen) auch bei niedrigen Temperaturen von Luft und Raumumschließungsflächen geeignet, durch eine definierte Zustrahlung dem Raumnutzer innerhalb kürzester Zeit angenehme Konditionen zu gewährleisten. Dabei müßte jedoch die Zustrahlung so begrenzt werden, daß thermischer Komfort, d.h. eine sogenannte Behaglichkeitstemperatur, auch dann eingehalten wird, wenn sich die Temperaturen von Luft und Raumumschließungsflächen im Laufe der Nutzungszeit ändern.

Da in der Regel die Raumumschließungsflächen Emissionskoeffizienten von ε ≈ 0,9 haben, entspricht die Temperatur der Raumumschließungsflächen nahezu der sogenannten Gesamtstrahlungstemperatur nach DIN 5031/5. Der Einfachhheit halber wird daher nachfolgend statt des Begriffes "Gesamtstrahlungstemperatur" bzw. "Strahlungstemperatur" durchgehend der Begriff "Temperatur der Raumumschließungsflächen" verwendet.

Ein eingangs genanntes Verfahren und eine entsprechende Anordnung dieser Art sind durch die ältere Anmeldung P 196 02 085 bekannt geworden. Bei dieser bekannten Bauart wird davon ausgegangen, daß die Komfortbedingungen in der Nähe des Heizstrahlers (ohne Wärmebestrahlung) ähnlich den Komfortbedingungen am Platz der Person (ohne Wärmebestrahlung) sind. Unter diesen Voraussetzungen kann dann die notwendige Strahlungsleistung zum Erreichen des Komforts aus den nachfolgend genannten Daten ermittelt werden, und zwar aus dem Komfortbedürfnis der Person, aus der Entfernung zwischen der Person und dem Heizstrahler und aus der Heizstrahler-Charakteristik (Bestrahlungsstärke in Abhängigkeit von Entfernung und Raumwinkel). Bei der bekannten Bauart kann der Heizstrahler so gesteuert und geregelt werden, daß für den Benutzer ein gewünschter thermischer Komfort auch dann eingehalten wird, wenn sich die Temperaturen von Luft und Raumumschließungsflächen während der Nutzungszeit stetig ändern, z.B. durch langsame Erwärmung des Raumes oder auch durch externe Sonnenstrahlung. Da bei dieser Bauart der Temperatursensor jedoch nicht am Ort der bestrahlten Person, sondern am Ort des Heizstrahlers angeordnet ist, ist bei jedem Vorgang immer eine gesonderte Entfernungsmessung und -einstellung erforderlich.

Die vorliegende Erfindung geht demgegenüber einen anderen Weg. Aufgabe ist hier ebenfalls, innerhalb kürzester Zeit ( < 10 min) dem Nutzer eines Raumes mit abgesenkter Temperatur (Empfindungs-Isttemperatur) einen thermischen Komfort zu gewährleisten und diesen auch durch eine entsprechende Regelung bei Veränderung der Temperatur von Luft und/oder Raumumschließungsflächen aufrechtzuerhalten. Dies soll ebenfalls mit einem kompakten, leichten, leistungsstarken Heizstrahler in Kombination mit einem geeigneten Sensor ermöglicht werden. Darüber hinaus will die Erfindung die eingangs genannte Bauart vereinfachen und die Meßgenauigkeit für die Empfindungstemperatur erhöhen.

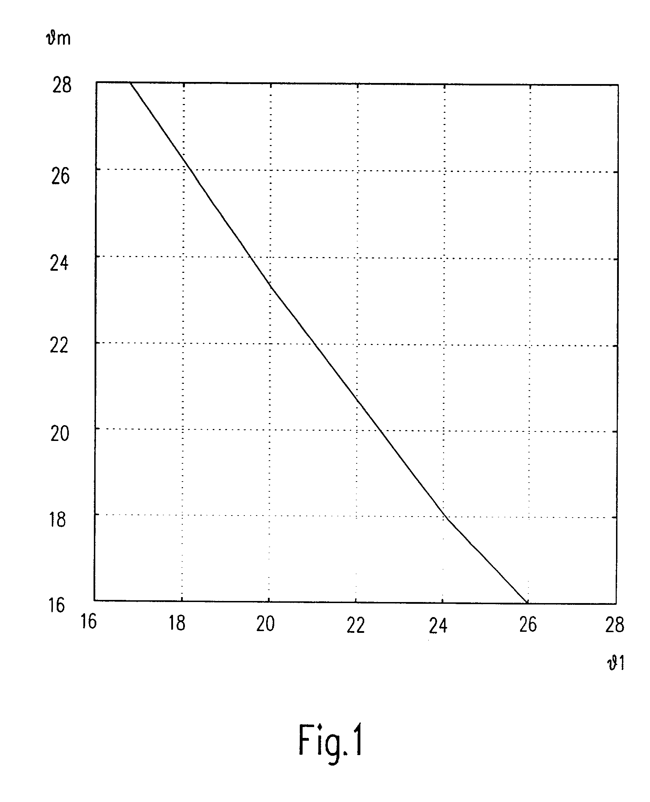

Nachfolgend werden einige Grundbegriffe im Zusammenhang mit der vorliegenden Erfindung erläutert. Der menschliche Körper steht in einem ständigen Wärmeaustausch mit seiner Umgebung. In erster Linie wird der thermische Komfort (die Behaglichkeit) beeinflußt durch die mittlere Temperatur aller Raumumschließungsflächen (mittels Strahlung) und durch die Lufttemperatur (mittels Konvektion). Daneben sind die Luftgeschwindigkeit und die Luftfeuchte ebenfalls von Bedeutung, letztere allerdings nur untergeordnet. Die Umgebungsbedingungen. und zwar die mittlere Temperatur der Umschließungsflächen, die Lufttemperatur und gegebenenfalls auch die Luftgeschwindigkeit, dürfen innerhalb bestimmter Grenzen recht unterschiedlich sein, und trotzdem kann der Mensch sie als komfortabel empfinden. Hierzu wird verwiesen auf eine in der Zeichnung (Fig. 1) in einem Diagramm dargestellte bekannte Behaglichkeitskennlinie für das Wertepaar Lufttemperatur ϑ₁ / mittlere Umschließungsflächentemperatur ϑₘ. Unkomfortable, zu kalte Umgebungsbedingungen können in Grenzen durch gezielte einseitige Bestrahlung ausgeglichen werden (Verteilung über den Blutkreislauf). Jedem Menschen ist in der freien Natur die wohltuende Sonnenstrahlung bei kalten Witterungsbedingungen geläufig.

Neben den oben beschriebenen Umgebungsbedingungen bestimmen die persönlichen Parameter, wie Kleidung und Aktivität, den menschlichen Komfort. Dies ist eingehend beschrieben in einem Artikel mit dem Titel "Mensch und Raumklima" von P.O. Fanger (Raumklimatechnik, 1. Grundlagen, Herausgeber H. Esdorn, 16. Auflage, Springer Verlag 1994, Seite 125 ff). In diesem Artikel sind auch Meßvorschriften beschrieben, die angeben, wie unterschiedliche Umgebungsbedingungen und persönliche Parameter (Kleidung, Aktivität) zu gleichem persönlichem Komfort führen können, siehe Rechenprogramm gemäß ISO 7730 (Seite 174/5). Dieser Algorithmus hat sich auch in käuflichen Meßgeräten niedergeschlagen (z.B. Comfy-Test). Dabei wird der Grad des Komforts angezeigt (Meßwert PMV: Predicted Mean Vote, <0 = zu kühl, 0 = komfortabel, >0 = zu warm). Die in Fig. 1 dargestellte Behaglichkeitslinie entspricht dem Wert PMV = 0.

Die bereits oben erwähnte Empfindungstemperatur wird nachfolgend näher erläutert. Für den Spezialfall "Temperatur der Raumumschließungsflächen = Lufttemperatur bei Luftgeschwindigkeit <0,1 m/s" ist diese Temperatur laut Definition betragsmäßig gleich der Empfindungstemperatur (operational temperature). Liegen dagegen völlig unterschiedliche Umgebungsbedingungen vor, so geht man bei der Bestimmung der Empfindungstemperatur wie folgt vor:
- Man bestimmt den Komfort nach der oben angeführten "Meßvorschrift" bei den jeweils gegebenen völlig unterschiedlichen Umgebungsbedingungen (Temperatur der Raumumschließungsflächen ≠ Lufttemperatur, Luftgeschwindigkeit gegebenenfalls > 0,1 m/s) und bei definierten typischen persönlichen Parametern (Kleidung, Aktivität),
- man erhält einen bestimmten PMV-Wert für den Komfort,
- man ermittelt rechnerisch oder experimentell diejenige Empfindungstemperatur, die den gleichen Komfort (PMV-Wert) erzeugt, indem man die Temperatur der Luft und der Raumumschließungsflächen aneinander angleicht und ruhende Luft (natürliche Konvektion) annimmt,
- das Ergebnis ist die Empfindungstemperatur.

Komforttemperatur ist diejenige Empfindungstemperatur, bei der der PMV-Wert entsprechend der Meßvorschrift nahe bei Null (PMV = 0: komfortabel) liegt (siehe Fig. 1).

Der Vorteil für die Definition einer Empfindungstemperatur ist offensichtlich: Wir haben ein gutes Gefühl und Urteilsvermögen für unseren "Bedarf" an Empfindungstemperatur, z.B. 18°C bei körperlicher Hausarbeit, 21°C im Wohnzimmer oder 24°C im Badezimmer. Unter der Größe "PMV" kann sich der Normalverbraucher wenig vorstellen. Ebensowenig hat er ein quantitatives Urteil für den Einfluß von Luftzug oder von recht unterschiedlichen, inhomogenen Temperaturen der Raumumschließungsflächen. An kalten Wintertagen "empfindet" man z.B. niedrige Temperaturen von -30°C und weniger, wenn bei ohnehin schon niedrigen Lufttemperaturen von z.B. -10°C auch noch ein kräftiger Wind weht. Die Meteorologen sprechen in diesem Zusammenhang auch von "gefühlten" Temperaturen. Diese Empfindungstemperatur berücksichtigt auch den Einfluß von Heizstrahlern in der richtigen Weise. Die einseitige Zustrahlung wird in der gleichen Weise berücksichtigt, wie beispielsweise eine erwärmte Wand oder die Zustrahlung von der Sonne durch ein Fenster. Ergänzend sollte noch bemerkt werden, daß in gut isolierten modernen Wohnräumen nur mit kleinen Konvektionsströmen zu rechnen ist (< 0,15 m/s), so daß man dort in der Regel den Einfluß der Luftgeschwindigkeit auf den Komfort vernachlässigen kann. Dies vereinfacht die Messung der Empfindungstemperatur, weil man nur das geeignete Mittel aus Lufttemperatur und Temperatur der Raumumschließungsflächen messen muß.

Die Lösung der der Erfindung zugrundeliegenden Aufgabe besteht darin,
- daß die Empfindungs-Isttemperatur im direkten Strahlungsfeld des Heizstrahlers in der Nähe der bestrahlten Person gemessen wird,
- daß diese Empfindungs-Isttemperatur mit der von der Person einstellbaren Empfindungs-Solltemperatur verglichen wird und
- daß die Differenz zwischen der gemessenen Empfindungs-Isttemperatur und der eingestellten Empfindungs-Solltemperatur durch die Leistung des Heizstrahlers zu Null geregelt wird.

Im Prinzip wird damit die Leistung des Heizstrahlers entsprechend der Differenz der beiden genannten Temperaturen geregelt. Mit einem derartigen Verfahren wird dem Raumnutzer trotz niedriger Temperatur der ihn umgebenden Raumumschließungsflächen und trotz zu niedriger Lufttemperatur auf schnelle und dauerhafte Weise ein thermischer Komfort geboten. Ein Regelsystem, z.B. ein PID-Regler, sorgt dafür, daß ein zu Beginn vom Nutzer gewünschter und eingestellter thermischer Komfort schnell erreicht und auch in der Folgezeit bei sich stetig verändernden Umgebungsbedingungen eingehalten wird. Dies beruht darauf, daß die genannten negativen Umgebungseinflüsse (niedrige Temperatur der Raumumschließungsflächen und zu niedrige Lufttemperatur) rasch durch eine zusätzliche kapazitätsarme, schnell regelbare Strahlungsquelle kompensiert werden. Durch das erfindungsgemäße Verfahren wird die notwendige Kompensation durch den Heizstrahler vom Nutzer und von einem die Messung vornehmenden Komfortsensor gleich bewertet. Dadurch, daß die Empfindungstemperatur in dem direkten, auf die Person gerichteten Strahlungsfeld des Heizstrahlers gemessen wird, und zwar in der Nähe der bestrahlten Person, kann eine gesonderte Entfernungsmessung zwischen dem Heizstrahler und der Person und eine entsprechende gesonderte Einstellung der gemessenen Entfernung entfallen. Vielmehr wird die gewünschte Empfindungs-Solltemperatur von der bestrahlten Person direkt eingegeben und mit der im direkten Strahlungsfeld gemessenen Empfindungs-Isttemperatur verglichen. Es sollte darauf geachtet werden, die Messung der Empfindungs-Isttemperatur im Strahlungsfeld des Heizstrahlers in der Nähe der Person vorzunehmen und auf etwa ähnliche Umgebungsbedingungen für die Person und für die Meßstelle zu achten, z.B. sollte eine etwa gleiche Entfernung und Höhe zum Heizstrahler eingehalten werden. Auch sollte ein gewisser Abstand von der Person eingehalten werden, z.B. etwa 0,5 m, um die Messung der Empfindungs-Isttemperatur nicht durch Körperwärme zu beeinflussen. Unter diesen Voraussetzungen braucht dann nur die gewünschte Empfindungs-Solltemperatur eingestellt zu werden, die sich im wesentlichen nach der Bekleidung und der Aktivität des Raumnutzers richtet. Damit gewährleistet das erfindungsgemäße Verfahren für die Person schnellen und gleichbleibenden Komfort, auch bei sich ändernden Umgebungsbedingungen, z.B. langsame Erwärmung des Raumes oder Sonnenzustrahlung.

Durch die Merkmale des Anspruchs 2 ergibt sich eine universellere Verwenbarkeit.

Die Merkmale des Anspruches 3 beschreiben eine zweckmäßige Anordnung zur Durchführung des oben genannten Verfahrens. Eine derartige Anordnung ist einfach im Aufbau und Handhabung und zuverlässig in der Wirkung. Als Sensor kann z.B. ein käuflicher Komfortsensor vorgesehen sein, der die gemessene Empfindungstemperatur und damit den Grad des Komforts anzeigt. Die Anzeige kann z.B. umgerechnet in °C erfolgen.

Die Merkmale des Anspruches 4 ermöglichen den Aufbau eines Temperaturauswerters entweder in Form einer Analogschaltung oder als Mikroprozessor.

Die Merkmale des Anspruches 5 offenbaren eine einfache Bauweise für das Zusammenwirken der einzelnen Elemente der Anordnung.

Die Merkmale des Anspruches 6 zeigen einen kompakten Aufbau der Anordnung, wobei die Empfindungs-Solltemperatur direkt am Gehäuse eingestellt wird. Dies ermöglicht die Verwendung eines einfachen Komfortsensors. Die Empfindungs-Solltemperatur kann auch über eine Fernbedienung eingestellt werden.

Die Merkmale des Anspruches 7 zeigen eine Bauweise, wobei Teile der Anordnung aus dem Gehäuse herausgenommen sind und mit dem Konfortsensor eine Baueinheit bilden. Damit ergibt sich ein einfacherer Aufbau des Gehäuses und die Möglichkeit, die Empfindungs-Solltemperatur direkt vor Ort bei dem Komfortsensor einstellen zu können.

Die Merkmale des Anspruches 8 ermöglichen eine einfache Übertragung der Temperaturdaten.

Wenn auch die Luftgeschwindigkeit berücksichtigt werden soll, so kann dafür z.B. ein kleines, batteriegespeistes Anemometer vorgesehen sein. Ferner sollte zweckmäßigerweise eine Ladestation zur Aufladung eines für den Betrieb des Komfortsensors erforderlichen Akkus vorgesehen sein, damit der Komfortsensor bei Ausfall des Akkus möglichst schnell wieder in Betrieb gesetzt werden kann.

Fig. 1 der Zeichnung zeigt in einem Diagramm eine bekannte Behaglichkeitslinie nach Fanger.

Fig. 2, 3 und 4 zeigen schematisch drei Ausführungsbeispiele des Gegenstandes gemäß der Erfindung, die sich durch die Anordnung einer Sollwerteinstellung und durch die Art der Übermittlung von Temperaturen bzw. Temperaturdifferenzen unterscheiden.

Gemäß Fig. 1 ist die mittlere Temperatur ϑₘ der Raumumschließungsflächen über der Lufttemperatur ϑ₁ aufgetragen. Die ausgezogene Linie zeigt die optimale Behaglichkeitskennlinie nach Fanger (s.o.). Meßwerte auf der Linie zeigen einen überall gleichen komfortablen Zustand (PMV = 0). Meßwerte unterhalb der Linie zeigen einen zu kalten (PMV <0) und Meßwerte oberhalb der Linie einen zu warmen (PMV > 0) Zustand. Je weiter die Meßwerte von der Linie entfernt sind, desto unkomfortabler sind die gemessenen Zustände. Das Diagramm in Fig. 1 gilt für Luftgeschwindigkeit 0,1 m/s und die folgenden äußeren Parameter:
· clo = 1 (bedeutet normale Bürobekleidung),
· met = 1,2 (bedeutet leichte sitzende Tätigkeit).

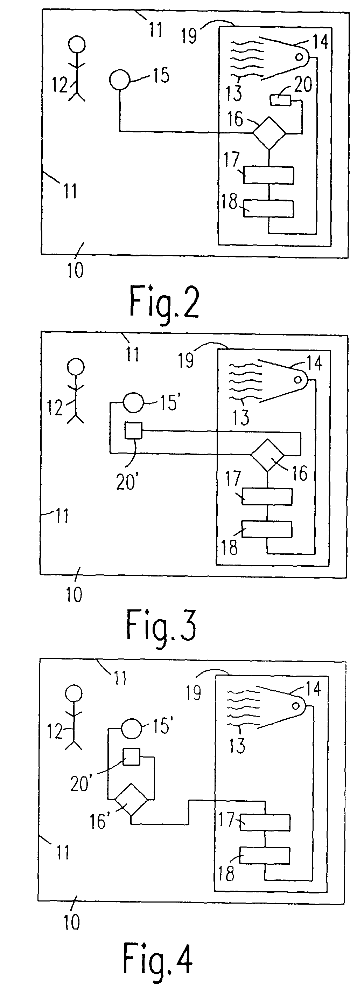

Fig. 2 bis 4 zeigen schematisch einen Raum 10 mit abgesenkter Temperatur, der von den Wänden 11 begrenzt wird. In dem Raum befindet sich eine Person 12, die mit Strahlung 13 eines Heizstrahlers 14 bestrahlt wird. In dessen Strahlungsbereich befindet sich ferner ein an sich bekannter Komfortsensor 15, 15', der den Grad des Komforts als Empfindungstemperatur anzeigt. Bei der Anzeige von z.B. 22°C liegen komfortable Verhältnisse vor, Meßwerte <20°C zeigen eine zu kühle Umgebung und Meßwerte >24°C zeigen eine zu warme Umgebung an. Der Komfortsensor 15, 15' befindet sich in der Nähe der Person 12 und ist somit dem gleichen Strahlungsfeld ausgesetzt wie die Person 12 selbst. Damit liegen in etwa gleiche Umgebungsbedingungen für die Person 12 und für den Sensor 15, 15' vor. Dies bedeutet, daß sowohl die Person als auch der Strahler in etwa gleiche Entfernung und gleiche Höhe im Hinblick auf den Heizstrahler 14 besitzen. Durch einen angemessenen Abstand ( > 0,5 m) von der Person 12 soll vermieden werden, daß der Sensor von der Körperwärme der Person beeinflußt wird. Mit 16 ist ein Temperaturauswerter, mit 17 ein Regler, z.B. ein PID-Regler, und mit 18 ein Leistungssteller für die Einstellung der erforderlichen Heizleistung für den Heizstahler 14 bezeichnet. Heizstrahler 14, Temperaturauswerter 16, Regler 17 und Leistungssteller 18 befinden sich gemäß Fig. 2 in einem gemeinsamen Gehäuse 19. Dabei kann eine von der Person 12 gewünschte Empfindungs-Solltemperatur an einem Steller 20 des Gehäuses 19 eingestellt werden, während gemäß Fig. 3 die gewünschte Empfindungs-Solltemperatur außerhalb des Gehäuses 19 an einem Steller 20' des Komfortsensors 15' eingestellt werden kann. Die Übertragung der Meßwerte vom Komfortsender 15, 15' zum Gehäuse 19 erfolgt im vorliegenden Beispiel schnurlos, z.B. über Funk, Infrarot oder dergleichen. Es ist ebenso möglich, eine leitungsgebundene Übertragung zu wählen.

Der Komfortsensor 15, 15' kann z.B. auf einem Schreibtisch aufgestellt werden und erfaßt die sogenannte Empfindungs-Isttemperatur, welche ein bewertetes Mittel der Temperaturen der Luft und der Raumumschließungsflächen beinhaltet. Gemäß Fig. 2 und 3 wird dieses Temperatursignal dem Temperaturauswerter 16 (analog oder mikroprozessorgesteuert) im Gehäuse 19 übermittelt, der sodann die Differenz zwischen der von der Person 12 vorgegebenen Empfindungs-Solltemperatur und der vom Sensor 15, 15' gemessenen Empfindungs-Isttemperatur bildet. Aufgrund dieser Differenz wird sodann mittels des PID-Reglers 17 über den Leistungssteller 18 dem Heizstrahler 14 die erforderliche Leistung zuführt.

Gemäß Fig. 4 findet die Auswertung der Temperatur bereits in dem Temperaturauswerter 16' außerhalb des Gehäuses 19 statt, und zwar in einer Baueinheit, die auch den Komfortsensor 15' und den Steller 20' umfaßt. Hierbei wird dann die Temperaturdifferenz zur Aussteuerung des PID-Reglers übertragen.

## Patentansprüche

1. Verfahren zur Erzielung einer Behaglichkeitstemperatur (Empfindungs-Solltemperatur) in der Umgebung einer in einem Raum (10) mit abgesenkter Temperatur (Empfindungs-Isttemperatur) befindlichen Person (12) mit Hilfe eines Heizstrahlers (14), dadurch gekennzeichnet,
- daß die Empfindungs-Isttemperatur im direkten Strahlungsfeld (13) des Heizstrahlers (14) in der Nähe der bestrahlten Person (12) gemessen wird,
- daß diese Empfindungs-Isttemperatur mit der von der Person (12) einstellbaren Empfindungs-Solltemperatur verglichen wird und
- daß die Differenz zwischen der gemessenen Empfindungs-Isttemperatur und der eingestellten Empfindungs-Solltemperatur durch die Leistung des Heizstrahlers (14) zu Null geregelt wird.

2. Verfahren nach Anspruch 1, dadurch gekennzeichnet, daß neben der Lufttemperatur und der Temperatur der Raumumschließungsflächen der Einfluß der Luftgeschwindigkeit und/oder der Luftfeuchtigkeit berücksichtigt wird.

3. Anordnung zur Durchführung eines Verfahrens nach Anspruch 1, gekennzeichnet
- durch einen auf die Person (12) ausrichtbaren Heizstrahler (14),
- durch einen transportablen, im Strahlungsfeld (13) des Heizstrahlers (14) nahe der Person (12) angeordneten Komfortsensor (15, 15') zur Erfassung der Empfindungs-Isttemperatur,
- durch einen Temperaturauswerter (16, 16') zur Auswertung der gemessenen Empfindungs-Isttemperatur und der eingestellten Empfindungs-Solltemperatur und
- durch eine mit einem Leistungssteller (18) und dem Heizstrahler (14) zusammenwirkende Regeleinrichtung (17), wodurch die Differenz zwischen den oben genannten Temperaturen zu Null geregelt wird.

4. Anordnung nach Anspruch 3, dadurch gekennzeichnet, daß der Temperaturauswerter (16, 16') zur Bildung der Differenz zwischen der Empfindungs-Solltemperatur und der Empfindungs-Isttemperatur entweder als Analogschaltung und oder Mikroprozessor ausgebildet ist.

5. Anordnung nach Anspruch 3, dadurch gekennzeichnet,
- daß der Temperaturauswerter (16, 16') einerseits mit dem Komfortsensor (15, 15') und einem Steller (20, 20') zur Einstellung der Empfindungs-Solltemperatur und andererseits mit der Regeleinrichtung (17) verbunden ist,
- daß die Regeleinrichtung (17) mit dem Leistungssteller (18) verbunden ist und
- daß der Leistungssteller (18) mit dem Heizstrahler (14) verbunden ist.

6. Anordnung nach Anspruch 5, gekennzeichnet durch ein gemeinsames Gehäuse für den Heizstrahler (14), den Temperaturauswerter (16) mit Steller (20), die Regeleinrichtung (17) und den Leistungssteller (18).

7. Anordnung nach Anspruch 5, dadurch gekennzeichnet, daß der Steller (20') zur Einstellung der Empfindungs-Solltemperatur und gegebenenfalls auch der Temperaturauswerter (16') mit dem Komfortsensor (15') eine eigene Baueinheit bildet.

8. Anordnung nach Anspruch 3, dadurch gekennzeichnet, daß die gemessene Temperatur bzw. Temperaturdifferenz schnurlos, z.B. durch ein Funksignal, ein Ultraschallsignal oder ein Infrarotsignal, an den Temperaturauswerter (16) bzw. an die Regeleinrichtung (17) übertragen wird.
